# EUROPEAN PATENT SPECIFICATION

(11) **EP 4 428 776 B1**
(45) Date of publication and mention of the grant of the patent: **06.05.2026**
(21) Application number: 23218670.0
(22) Date of filing: 20.12.2023
(51) Int. Cl.: G06Q 50/40, B60L 53/80, B60L 53/30, B60L 53/68

(54) **DOOR MANAGEMENT METHOD FOR UNATTENDED BATTERY SWAP STATION SYSTEM**
TÜRVERWALTUNGSVERFAHREN FÜR UNBEAUFSICHTIGTES BATTERIEWECHSELSTATIONSSYSTEM
PROCÉDÉ DE GESTION DE PORTE POUR SYSTÈME DE STATION DE PERMUTATION DE BATTERIE SANS SURVEILLANCE

(30) Priority: 07.03.2023 CN 202310232554
(43) Date of publication of application: 11.09.2024
(73) Proprietor: Nio Technology (Anhui) Co., Ltd, Hefei City, Anhui 230601 (CN)
(72) Inventor: WANG, Zhenglai, Hefei City, Anhui (CN); WANG, Yifei, Hefei City, Anhui (CN); HUANG, Xiyuan, Hefei City, Anhui (CN); YANG, Junhai, Hefei City, Anhui (CN); ZOU, Jiyong, Hefei City, Anhui (CN)
(74) Representative: Vossius & Partner Patentanwälte Rechtsanwälte mbB

(56) References cited:
- CN-A- 111 885 143
- CN-A- 114 701 390
- CN-A- 114 906 005
- US-A1- 2023 311 701
- US-A1- 2023 356 620
- JUNSHENG GU: "CN111885143A", 3 November 2020 (2020-11-03), XP093169396, Retrieved from the Internet <URL:http://localhost>

## Description

The present application claims priority of CN patent application 202310232554.3 filed on March 7, 2023 with the title "Door management method for unattended battery swap station system".

### Technical Field

The disclosure relates to the technical field of battery swap stations, and in particular to a door management method for an unattended battery swap station system.

### Background Art

As the new energy vehicle market continues to heat up, new energy users are also increasing day by day. With the expansion of the user base, how to replenish electric energy conveniently and quickly has become a focus of user attention. In this context, battery swap stations have emerged, which can easily and quickly replenish energy for electric vehicles by replacing traction batteries.

At present, due to the increasing number of battery swap stations and the increasing labor costs, unattended battery swap stations have become an important development direction for battery swap stations. Such a battery swap station can get rid of the problem of service personnel being on duty 24 hours a day and realize battery swapping. However, a door of the current unattended battery swap station controls to determine whether to close a door body only through a sensor mounted near the door, without considering specific conditions in the station, which poses a safety hazard.

CN 114 701 390 A discloses the technical field of safety protection, in particular to a safety protection method, system, medium and device for a battery charging and replacing station and the battery charging and replacing station.

CN 114 906 005 A discloses a system and a method for pile-station integrated linkage calling energy supplement. The system is applied to a battery swap station, a charging pile is arranged outside the battery swap station, and the system comprises a battery swap calling unit, an energy complementation confirmation unit and a charging calling unit.

CN 111 885 143 A discloses a vehicle battery replacement method, a device and a system. Information interactions between the battery replacing station and the vehicle can be realized without participation of battery replacing station personnel in the whole battery replacing process, and the actual development requirement of the battery replacing technology is met.

Accordingly, there is a need for a new technical solution in the art to solve the problem described above.

### Summary

The subject-matter of the present invention is defined in independent claim 1. Further preferred embodiments of the present invention are defined in the dependent claims. In particular, the disclosure provides a door management method for an unattended battery swap station system to solve at least one of the above problems in the prior art, that is, to solve the following problem: A door body of a current unattended battery swap station determines whether to close the door body only through a sensor near the door body, without considering specific conditions in the station, which poses a safety hazard. The unattended battery swap station system includes a controller, an AI edge computing unit, a monitoring device, and a door control device. The controller is connected to the AI edge computing unit and the door control device, and the AI edge computing unit is connected to the monitoring device. The door management method includes:
obtaining, by the controller, battery swap information of a vehicle;
determining, based on the battery swap information, whether battery swap for the vehicle is completed;
when the battery swap for the vehicle is completed, determining, by the AI edge computing unit, whether a door body meets a closing condition; and
controlling, based on a determining result, the door control device to selectively close the door body.

In a preferred technical solution of the foregoing door management method, the step of "when the battery swap for the vehicle is completed, determining, by the AI edge computing unit, whether a door body meets a closing condition" further includes:
when the battery swap for the vehicle is completed, sending, by the controller, a first instruction to the AI edge computing unit, so that the AI edge computing unit determines, based on the first instruction, whether there are vehicles, persons, and/or animals in the unattended battery swap station.

In a preferred technical solution of the foregoing door management method, the step of "controlling, based on a determining result, the door control device to selectively close the door" further includes:
when there are no vehicles, persons, and/or animals in the unattended battery swap station, controlling the door control device to close the door body; or
when there are vehicles, persons, and/or animals in the unattended battery swap station, controlling the door control device to open the door body.

In a preferred technical solution of the foregoing door management method, the door management method further includes:
in response to the controller sending the first instruction to the AI edge computing unit, in a case that the AI edge computing unit has not obtained the first instruction, obtaining a first number of sending times for which the controller sends the first instruction to the AI edge computing unit;
comparing the first number of sending times with a first preset number of times; and
when the first number of sending times is greater than or equal to the first preset number of times, sending first alarm information to a server of the unattended battery swap station system; or
when the first number of sending times is less than the first preset number of times, continuing to send the first instruction to the AI edge computing unit.

In a preferred technical solution of the foregoing door management method, before the step of "determining, by the AI edge computing unit based on the first instruction, whether there are vehicles, persons, and/or animals in the unattended battery swap station", the door management method further includes:
determining, by the AI edge computing unit based on the first instruction, whether the monitoring device and its communication are normal; and
when the monitoring device and its communication are normal, determining whether there are vehicles, persons, and/or animals in the unattended battery swap station.

In a preferred technical solution of the foregoing door management method, the door management method further includes:
performing, by the AI edge computing unit, verification on a result that the monitoring device and its communication are normal; and
when the verification succeeds, determining whether there are vehicles, persons, and/or animals in the unattended battery swap station.

In a preferred technical solution of the foregoing door management method, the door management method further includes:
when the verification fails, obtaining a first number of verification times;
comparing the first number of verification times with a first preset number of verification times; and
when the first number of verification times is greater than or equal to the first preset number of verification times, determining that the door body does not meet the closing condition, and sending second alarm information to the server; or
when the first number of verification times is less than the first preset number of verification times, performing, by the AI edge computing unit, verification on the result that the monitoring device and its communication are normal.

In a preferred technical solution of the foregoing door management method, the management method further includes:
when the monitoring device or the communication of the monitoring device or both are abnormal, sending third alarm information to the server.

In a preferred technical solution of the foregoing door management method, after the step of "when there are vehicles, persons, and/or animals in the unattended battery swap station, controlling the door control device to close the door body", the door management method further includes:
sending, by the controller, a second instruction to the AI edge computing unit, so that the AI edge computing unit determines, based on the second instruction, whether the door body is in a closed state; and
when the door body is in the closed state, sending a third instruction to the server.

In a preferred technical solution of the foregoing door management method, the door management method further includes:
when the door body is in an open state, obtaining a closing time of the door body;
comparing the closing time of the door body with a first preset time; and
when the closing time is greater than or equal to the first preset time, sending fourth alarm information to the server; or
when the closing time is less than the first preset time, controlling the door control device to close the door body.

In a preferred technical solution of the foregoing door management method, the door management method further includes:
in response to the controller sending the second instruction to the AI edge computing unit, in a case that the AI edge computing unit has not received the second instruction, obtaining a second number of sending times for which the controller sends the second instruction to the AI edge computing unit;
comparing the second number of sending times with a second preset number of times; and
when the second number of sending times is greater than or equal to the second preset number of times, sending fifth alarm information to the server; or
when the second number of sending times is less than the second preset number of times, sending the second instruction to the AI edge computing unit.

In a preferred technical solution of the foregoing door management method, before the step of "determining, by the AI edge computing unit based on the second instruction, whether the door body is in a closed state", the door management method further includes:
determining, by the AI edge computing unit based on the second instruction, whether the monitoring device and its communication are normal; and
when the monitoring device and its communication are normal, determining whether the door body is in the closed state.

In a preferred technical solution of the foregoing door management method, before the step of "determining whether the door body is in a closed state", the door management method further includes:
performing, by the AI edge computing unit, verification on a result that the monitoring device and its communication are normal; and
when the verification succeeds, determining whether the door body is in the closed state.

In a preferred technical solution of the foregoing door management method, the door management method further includes:
when the verification fails, obtaining a second number of verification times;
comparing the second number of verification times with a second preset number of verification times; and
when the second number of verification times is greater than or equal to the second preset number of verification times, determining that the door body does not meet the closing condition, and sending sixth alarm information to the server; or
when the second number of verification times is less than the second preset number of verification times, performing, by the AI edge computing unit, verification on the result that the monitoring device and its communication are normal.

In a preferred technical solution of the foregoing door management method, the management method further includes:
when the monitoring device or the communication of the monitoring device or both are abnormal, sending seventh alarm information to the server.

In a preferred technical solution of the foregoing door management method, before the step of "determining, by the AI edge computing unit, whether the door body meets a closing condition", the door management method further includes:
when the battery swap for the vehicle is completed, sending, by the controller, a third instruction to a head unit, so that after the head unit receives the third instruction, the controller determines whether the door body meets the closing condition, through the AI edge computing unit.

In a preferred technical solution of the foregoing door management method, the door management method further includes:
in response to the controller sending the third instruction to the head unit, in a case that the head unit has not obtained the third instruction sent from the controller, obtaining a third number of sending times of the third instruction;
comparing the third number of sending times with a third preset number of times; and
when the third number of sending times is greater than or equal to the third preset number of times, sending eighth alarm information to the server; or
when the third number of sending times is less than the third preset number of times, sending the third instruction to the head unit.

In a preferred technical solution of the foregoing door management method, after the step of "when the third number of sending times is greater than or equal to the third preset number of times, sending eighth alarm information to the server", the door management method further includes:
obtaining a fourth number of sending times of the eighth alarm information;
comparing the fourth number of sending times with a fourth preset number of times; and
when the fourth number of sending times is greater than or equal to the fourth preset number of times, disconnecting, by the controller, a connection to the head unit; or
when the fourth number of sending times is less than the fourth preset number of times, sending the eighth alarm information to the server.

In a preferred technical solution of the foregoing door management method, after the step of "when the fourth number of sending times is greater than or equal to the fourth preset number of times, disconnecting, by the controller, a connection to the head unit", the door management method further includes:
obtaining, by the server, a waiting time for interacting with the controller;
comparing the waiting time with a second preset time; and
when the waiting time is greater than the second preset time, generating, by the server, fault information; or
when the waiting time is less than the second preset time, sending, by the controller, the third instruction to the server.

In a preferred technical solution of the foregoing door management method, the door management method further includes:
after the head unit receives the third instruction, sending, by the controller, a fourth instruction to the server, so that after the server receives the fourth instruction, the controller determines whether the door body meets the closing condition, through the AI edge computing unit.

In a preferred technical solution of the foregoing door management method, the door management method further includes:
in response to the controller sending the fourth instruction to the server, in a case that the server has not received the fourth instruction, obtaining a fifth number of sending times of the fourth instruction;
comparing the fifth number of sending times with a fifth preset number of times; and
when the fifth number of sending times is greater than or equal to the fifth preset number of times, sending ninth alarm information to the server; or
when the fifth number of sending times is less than the fifth preset number of times, sending the fourth instruction to the server.

In a preferred technical solution of the foregoing door management method, the monitoring device is a camera and/or a sensor.

Those skilled in the art can understand that, according to the door management method for an unattended battery swap station system in the disclosure, an AI edge computing unit determines whether the door body meets a closing condition. The AI edge computing unit can empower the entire unattended battery swap station system, enabling the battery swap station to be unattended. In addition, the AI edge computing unit can identify and determine whether the door body meets the closing condition, based on the situations in the battery swap station, improving the safety performance of the battery swap station. The following problem is solved: A door body of a current unattended battery swap station determines whether a door control device closes the door body only through a sensor near the door body, without considering specific conditions in the station, which poses a safety hazard.

Further, by determining whether there are vehicles, persons, and/or animals in the unattended battery swap station, it is possible to prevent vehicles, persons, and/or animals from being locked in the battery swap station, and it is also possible to prevent vehicles, persons, and/or animals from getting caught.

Further, when there are no vehicles, persons, and/or animals in the unattended battery swap station, the door is controlled to close; and when there are vehicles, persons, and/or animals in the unattended battery swap station, the door control device is controlled to open the door body, which can not only improve the safety performance of the battery swap station, but can also avoid safety hazards such as vehicles, persons, and/or animals being locked in the battery swap station and vehicles, persons, and/or animals getting caught.

Further, by comparing the first number of sending times of the first instruction with the first preset number of times, it is possible to determine whether the interaction between the controller and the AI edge computing unit is normal, which facilitates timely resolution when the interaction between the controller and the AI edge computing unit is abnormal, thereby further avoiding the occurrence of safety hazards.

Further, detecting whether the monitoring device and the communication of the monitoring device are normal before determining whether there are vehicles, persons, and/or animals in the battery swap station can improve the accuracy of the determining result, and also facilitates timely resolution when the monitoring device and its communication are abnormal.

Further, performing verification on the result that the monitoring device and its communication are normal before determining whether there are vehicles, persons, and/or animals in the unattended battery swap station can improve the accuracy of the determining result.

Further, controlling the door control device to close the door body and then determining whether the door body is closed can avoid safety hazards in the battery swap station due to a failure of the door control device.

Further, by comparing the closing time of the door body with the first preset time, it is determined whether the door control device fails, so that the door control device can send an alarm to the server when a failure occurs, which is beneficial to solving the failure of the door control device.

Further, by comparing the second number of sending times of the second instruction with the second preset number of times, it is possible to determine whether the interaction between the controller and the AI edge computing unit is normal, which facilitates timely resolution when the interaction between the controller and the AI edge computing unit is abnormal, thereby further avoiding the occurrence of safety hazards.

Further, detecting whether the monitoring device and the communication of the monitoring device are normal before determining whether the door body is in a closed state can improve the accuracy of the determining result, and also facilitates timely resolution when the monitoring device and the communication of the monitoring device are abnormal.

Further, performing verification on the result that the monitoring device and its communication are normal before determining whether the door body is in a closed state can improve the accuracy of the determining result.

Further, sending the third instruction to the head unit after the battery swap for the vehicle is completed is beneficial to notify the user to drive away from the battery swap station in time, thereby avoiding the door body of the battery swap station being opened for a long time and avoiding safety hazards to a great extent.

Further, by comparing the third number of sending times with the third preset number of times, it is possible to determine whether the interaction between the controller and the head unit is normal, which facilitates timely resolution when the interaction between the controller and the head unit is abnormal, thereby avoiding the occurrence of safety hazards to a great extent.

### Brief Description of the Drawings

A door management method for an unattended battery swap station system in the disclosure is described below with reference to the accompanying drawings. In the drawings:
FIG. 1 is a flowchart of a door management method for an unattended battery swap station system according to the disclosure;
FIG. 2 is a system diagram of an unattended battery swap station system according to the disclosure; and
FIG. 3 is a logic diagram of a possible implementation of a door management method for an unattended battery swap station system according to the disclosure.

### Detailed Description of Embodiments

Preferred implementations of the disclosure are described below with reference to the accompanying drawings. Those skilled in the art should understand that these implementations are only used to explain the technical principles of the disclosure, and are not intended to limit the scope of protection of the disclosure. For example, although the implementations are described in conjunction with a battery swap station, it is not intended to limit the scope of protection of the disclosure. Without departing from the principles of the disclosure, those skilled in the art can apply the disclosure to other application scenarios as long as the place has an unattended battery swap station system. For example, the place may be a charging station or the like.

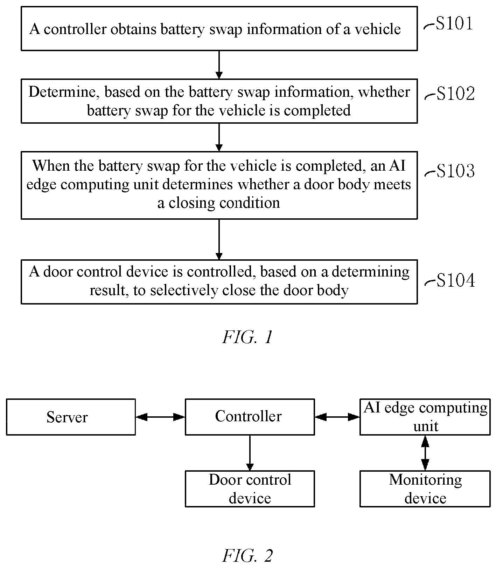

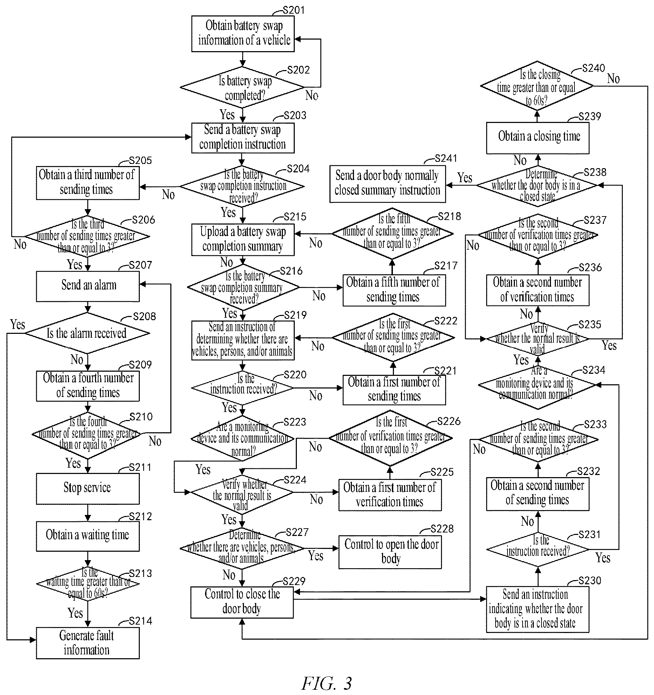

First, a door management method for an unattended battery swap station system in the disclosure is described with reference to FIG. 1, FIG. 2, and FIG. 3. FIG. 1 is a flowchart of a door management method for an unattended battery swap station system according to the disclosure; FIG. 2 is a system diagram of an unattended battery swap station system according to the disclosure; and FIG. 3 is a logic diagram of a possible implementation of a door management method for an unattended battery swap station system according to the disclosure.

As shown in FIG. 1 and FIG. 2, the disclosure provides a door management method for an unattended battery swap station system to solve the following problem: A door body of a current unattended battery swap station determines whether a door control device closes the door body only through a sensor near the door body, without considering specific conditions in the station, which poses a safety hazard. The unattended battery swap station system includes a controller, an AI edge computing unit (AEC), a server, a monitoring device, and a door control device.

As the brain of the unattended battery swap station, the controller is connected to the AI edge computing unit, the server, the monitoring device, and the door control device, and can exchange information with the AI edge computing unit, the server, and the monitoring device. The AI edge computing unit is connected to the monitoring device, and the monitoring device is configured to monitor the unattended battery swap station, so that the AI edge computing unit can use data sent by the monitoring device to determine whether the door body meets a closing condition. The door control device is connected to the door body for controlling the opening or closing of the door body. The server is a cloud server.

As shown in FIG. 1, with the foregoing configuration, the door management method for an unattended battery swap station system in the disclosure includes the following steps.

S 101. A controller obtains battery swap information of a vehicle. For example, after the vehicle enters a battery swap station, a head unit of the vehicle may be connected to the controller of the unattended battery swap station system. Because the head unit of the vehicle is connected to a battery in the vehicle, and the head unit can obtain information such as state of charge, current, voltage, or the like of the battery, the controller is connected to the head unit and can obtain the battery swap information of the vehicle.

S 102. Determine, based on the battery swap information, whether battery swap for the vehicle is completed. For example, after the battery swap information of the vehicle is obtained, based on the information fed back to the controller by the head unit, such as state of charge, current, voltage, or the like of the battery of the vehicle, the controller can determine whether the battery swap for the vehicle is completed.

S 103. When the battery swap for the vehicle is completed, an AI edge computing unit determines whether a door body meets a closing condition. For example, a camera may be provided in the battery swap station, the camera may obtain situations in the battery swap station in real time, and the AI edge computing unit may determine whether the door body meets the closing condition, through the camera, that is, the AI edge computing unit may determine whether there is a foreign body at the door body of the battery swap station, through the camera. If there is a foreign body, the door body does not meet the closing condition; and if there is no foreign body at the door body, the door body meets the closing condition.

S104. Control, based on a determining result, a door control device to selectively close the door body. For example, when the door body meets the closing condition, the door control device is controlled to close the door body; and when the door body does not meet the closing condition, the controller may control the door control device to open the door body.

The AI edge computing unit determines whether the door body meets the closing condition. The AI edge computing unit can empower the entire unattended battery swap station system, enabling the battery swap station to be unattended. In addition, the AI edge computing unit can identify and determine whether the door body meets the closing condition, based on the situations in the battery swap station, improving the safety performance of the battery swap station. The following problem is solved: A door body of a current unattended battery swap station determines whether to close the door body only through a sensor near the door body, without considering specific conditions in the station, which poses a safety hazard.

Preferred implementations of the door management method for an unattended battery swap station system according to the disclosure are described below.

In an implementation, before the step of "determining, by the AI edge computing unit, whether the door body meets a closing condition", the door management method further includes:
when the battery swap for the vehicle is completed, sending, by the controller, a third instruction to a head unit, so that after the head unit receives the third instruction, the controller determines whether the door body meets the closing condition, through the AI edge computing unit.

For example, the third instruction is a battery swap completion instruction in the following description. After the battery swap for the vehicle is completed, the controller sends the battery swap completion instruction to the head unit. After the head unit obtains the battery swap completion instruction, the user of the vehicle is notified that the battery swap for the vehicle has been completed and that the user needs to drive away from the battery swap station as soon as possible. The controller then uses the AI edge computing unit to determine whether the door body meets the closing condition.

Further, the door management method further includes:
in response to the controller sending the third instruction to the head unit, in a case that the head unit has not obtained the third instruction sent from the controller, obtaining a third number of sending times of the third instruction;
comparing the third number of sending times with a third preset number of times; and
when the third number of sending times is greater than or equal to the third preset number of times, sending eighth alarm information to the server; or
when the third number of sending times is less than the third preset number of times, sending the third instruction to the head unit.

For example, the third instruction is a battery swap completion instruction and the third preset number of times is 3 in the following description. When the head unit has not obtained the battery swap completion instruction sent from the controller, the controller obtains the third number of sending times for which the battery swap completion instruction is sent to the head unit, and compares the third number of sending times with the third preset number of times. When the third number of sending times is great than or equal to 3, it indicates that interaction between the head unit and the controller is abnormal. In this case, the head unit cannot obtain the battery swap completion instruction sent from the controller at all, and therefore an alarm is sent to the server to indicate that the interaction between the head unit and the controller is abnormal. When the third number of sending times is less than 3, it is not yet possible to confirm whether there is any abnormality in the interaction between the head unit and the controller, and therefore the controller continues to send the battery swap completion instruction to the head unit. The eighth alarm information includes interaction fault information between the head unit and the controller.

Still further, after the step of "when the third number of sending times is greater than or equal to the third preset number of times, sending eighth alarm information to the server", the door management method further includes:
obtaining a fourth number of sending times of the eighth alarm information;
comparing the fourth number of sending times with a fourth preset number of times; and
when the fourth number of sending times is greater than or equal to the fourth preset number of times, disconnecting, by the controller, a connection to the head unit; or
when the fourth number of sending times is less than the fourth preset number of times, sending the eighth alarm information to the server.

To confirm whether the server has received the eighth alarm information, it is required to confirm the number of times for which the eighth alarm information is sent to the server. The fourth preset number of times is 3 in the following description. When the fourth number of sending times is great than or equal to 3, it indicates that interaction between the server and the controller is abnormal. In this case, the controller cannot feed back a status of the vehicle to the server, the controller disconnects a connection to the head unit, and the battery swap station no longer provides a service to the vehicle. When the fourth number of sending times is less than 3, it is not yet possible to confirm whether there is any abnormality in the interaction between the server and the controller, and therefore the controller continues to send the eighth alarm to the server.

Still further, after the step of "when the fourth number of sending times is greater than or equal to the fourth preset number of times, disconnecting, by the controller, a connection to the head unit", the door management method further includes:
obtaining, by the server, a waiting time for interacting with the controller;
comparing the waiting time with a second preset time; and
when the waiting time is greater than or equal to the second preset time, generating, by the server, fault information; or
when the waiting time is less than the second preset time, sending, by the controller, the eighth alarm information to the server.

It should be noted that the interaction between the server and the controller has timeout protection. When the server obtains the waiting time for interacting with the controller, the disclosure does not limit content of the interaction between the server and the controller, as long as the interaction between the server and the controller can be performed. For example, the interaction between the server and the controller may be that the server receives the eighth alarm information sent by the controller.

For example, the second preset time is 60s in the following description. When the waiting time is greater than or equal to 60s, it indicates that there is no interaction between the server and the controller within the time range. In this case, it is confirmed that the interaction between the server and the controller is abnormal. When the interaction between the server and the controller is abnormal, the server generates fault information, and server-side personnel handle the problem according to the fault information. When the waiting time is less than 60s, it is not yet possible to confirm whether there is any abnormality in the interaction between the server and the controller, and therefore the controller continues to send the eighth alarm information to the server.

In an implementation, the door management method further includes:
after the head unit receives the third instruction, sending, by the controller, a fourth instruction to the server, so that after the server receives the fourth instruction, the controller determines whether the door body meets the closing condition, through the AI edge computing unit.

For example, the third instruction is the battery swap completion instruction and the fourth instruction is a battery swap completion summary instruction in the following description. After the head unit receives the battery swap completion instruction, the controller sends the battery swap completion summary instruction to the server, and after the server receives the battery swap completion summary instruction, the unattended battery swap station no longer provides a battery swap service for the vehicle. The controller then uses the AI edge computing unit to determine whether the door body meets the closing condition.

Further, the door management method further includes:
in response to the controller sending the fourth instruction to the server, in a case that the server has not received the fourth instruction, obtaining a fifth number of sending times of the fourth instruction;
comparing the fifth number of sending times with a fifth preset number of times; and
when the fifth number of sending times is greater than or equal to the fifth preset number of times, sending ninth alarm information to the server; or
when the fifth number of sending times is less than the fifth preset number of times, continuing to send the fourth instruction to the server.

For example, the fourth instruction is the battery swap completion summary instruction and the fifth preset number of times is 3 in the following description. When the server has not received the battery swap completion summary instruction, the fifth preset number of times for which the controller sends the battery swap completion summary instruction to the server is obtained. The fifth number of sending times is compared with the fifth preset number of times to determine whether there is any abnormality in the interaction between the controller and the server. When the fifth number of sending times is greater than or equal to 3, the interaction between the server and the controller is abnormal, and the server cannot receive the battery swap completion summary instruction at all. When the fifth number of sending times is less than 3, it is not yet possible to confirm whether there is any abnormality in the interaction between the controller and the server, and the controller needs to continue to send the battery swap completion summary instruction to the server. The ninth alarm information includes interaction fault information between the controller and the server.

In an implementation, the step of "when the battery swap for the vehicle is completed, determining, by the AI edge computing unit, whether a door body meets a closing condition" further includes:
when the battery swap for the vehicle is completed, sending, by the controller, a first instruction to the AI edge computing unit, so that the AI edge computing unit determines, based on the first instruction, whether there are vehicles, persons, and/or animals in the unattended battery swap station.

Determining whether the door body meets the closing condition is determining whether there are vehicles, persons, and/or animals in the unattended battery swap station. For example, the first instruction is an instruction of determining whether there are vehicles, persons, and/or animals in the battery swap station in the following description. When the controller sends the instruction of determining whether there are vehicles, persons, and/or animals in the battery swap station to the AI edge computing unit, after the AI edge computing unit receives the instruction, the AI edge computing unit performs calculation based on data sent from the monitoring device, and determines whether there are vehicles, persons, and/or animals in the unattended battery swap station.

Further, the step of "controlling, based on a determining result, the door control device to selectively close the door" further includes:
when there are no vehicles, persons, and/or animals in the unattended battery swap station, controlling the door control device to close the door body; or
when there are vehicles, persons, and/or animals in the unattended battery swap station, controlling the door control device to open the door body.

When the AI edge computing unit determines, based on the data sent by the monitoring device, that there are no vehicles, persons, and/or animals in the unattended battery swap station, it indicates that when the door body is closed, there is no hidden danger that vehicles, persons, and/or animals are locked in the unattended battery swap station, and there is also no hidden danger that vehicles, persons, and/or animals get caught. Therefore, the door body meets the closing condition, and the controller controls the door control device to close the door body. When the AI edge computing unit determines, based on the data sent by the monitoring device, that there are vehicles, persons, and/or animals in the unattended battery swap station, it indicates that when the door body is closed, there is the problem that vehicles, persons, and/or animals are locked in the unattended battery swap station and there is the safety hazard that vehicles, persons, and/or animals get caught. In this case, the closing condition of the door body is not met, and the controller controls the door control device to open the door body.

In an implementation, the door management method further includes:
in response to the controller sending the first instruction to the AI edge computing unit, in a case that the AI edge computing unit has not obtained the first instruction, obtaining a first number of sending times for which the controller sends the first instruction to the AI edge computing unit;
comparing the first number of sending times with a first preset number of times; and
when the first number of sending times is greater than or equal to the first preset number of times, sending first alarm information to a server; or
when the first number of sending times is less than the first preset number of times, continuing to send the first instruction to the AI edge computing unit.

For example, the first preset number of times is 3 and the first instruction is an instruction of determining whether there are vehicles, persons, and/or animals in the battery swap station in the following description. When the AI edge computing unit has not obtained the first instruction sent from the controller, the first number of sending times for which the controller sends the first instruction to the AI edge computing unit is obtained. When the first number of sending times is greater than or equal to 3, it indicates that the interaction between the AI edge computing unit and the controller is faulty, and the AI edge computing unit cannot obtain the instruction of determining whether there are vehicles, persons, and/or animals in the vehicle sent by the controller at all, so that the first alarm information is sent to the server to indicate that there is a fault in the interaction between the AI edge computing unit and the controller. To solve this fault, server-side personnel can intervene to deal with the problem. When the first number of sending times is less than 3, it is not yet possible to confirm whether there is a fault in the interaction between the AI edge computing unit and the controller in this case, and therefore the controller needs to continue to send the instruction of determining whether there are vehicles, persons, and/or animals in the vehicle to the AI edge computing unit. The first alarm information includes interaction fault information between the controller and the AI edge computing unit.

In an implementation, before the step of "determining, by the AI edge computing unit based on the first instruction, whether there are vehicles, persons, and/or animals in the unattended battery swap station", the method further includes:
determining, by the AI edge computing unit based on the first instruction, whether the monitoring device and its communication are normal; and
when the monitoring device and its communication are normal, determining whether there are vehicles, persons, and/or animals in the unattended battery swap station.

Before determining whether there are vehicles, persons, and/or animals in the unattended battery swap station, the AI edge computing unit detects whether the monitoring device and its communication are normal, to improve the accuracy of the determining result. When the AI edge computing unit detects that the monitoring device and its communication are normal, it indicates that there is no problem with the data sent by the monitoring device to the AI edge computing unit, and then the AI edge computing unit may determine whether there are vehicles, persons, and/or animals in the unattended battery swap station, which can improve the determining accuracy.

Further, the door management method further includes:
performing, by the AI edge computing unit, verification on a result that the monitoring device and its communication are normal; and
when the verification succeeds, determining whether there are vehicles, persons, and/or animals in the unattended battery swap station.

When the AI edge computing unit detects that the monitoring device and its communication are normal, the verification is performed on the detection result, which can further improve the accuracy of the result that the AI edge computing unit determines whether there are vehicles, persons, and/or animals in the unattended battery swap station. After the verification succeeds, the AI edge computing unit determines whether there are vehicles, persons, and/or animals in the unattended battery swap station, so that the accuracy of the determining result is improved.

Still further, the door management method further includes:
when the verification fails, obtaining a first number of verification times;
comparing the first number of verification times with a first preset number of verification times; and
when the first number of verification times is greater than or equal to the first preset number of verification times, determining that the door body does not meet the closing condition, and sending second alarm information to the server; or
when the first number of verification times is less than the first preset number of verification times, performing, by the AI edge computing unit, verification on the result that the monitoring device and its communication are normal.

For example, the first preset number of verification times is 3 in the following description. When the AI edge computing unit verifies that the result that the monitoring device and its communication are normal is invalid, the first number of verification times is obtained. When the first number of verification times is greater than or equal to 3, it is confirmed that the result that the monitoring device and its communication are normal is invalid, and there is a fault in the operation of the AI edge computing unit. In this case, the AI edge computing unit no longer determines whether there are vehicles, persons, and/or animals in the unattended battery swap station, and sends the second alarm information to the server. When the first number of verification times is less than 3, it is not yet possible to determine whether the verification of the result that the monitoring device and its communication are normal succeeds, and the AI edge computing unit still needs to verify the result that the monitoring device and its communication are normal. The second alarm information includes an operation fault of the AI edge computing unit.

In an implementation, the door management method further includes:
when the monitoring device or the communication of the monitoring device or both are abnormal, sending third alarm information to the server.

When the monitoring device or the communication of the monitoring device or both are abnormal, it indicates that there is a fault in the monitoring device and/or the communication of the monitoring device, the third alarm information is sent to the server to indicate that there is a fault in the monitoring device and/or the communication of the monitoring device. In a case that there is a fault in the monitoring device and/or the communication of the monitoring device, it is impossible to determine whether there are vehicles, persons, and/or animals in the battery swap station. To avoid safety hazards that the vehicles, persons, and/or animals are locked in the unattended battery swap station and the vehicles, persons, and/or animals get caught, the controller may control the door control device to open the door body. The third alarm information includes fault information of the monitoring device and/or communication fault information of the monitoring device.

In an implementation, after the step of "when there are vehicles, persons, and/or animals in the unattended battery swap station, controlling the door control device to close the door body", the method further includes:
sending, by the controller, a second instruction to the AI edge computing unit, so that the AI edge computing unit determines, based on the second instruction, whether the door body is in a closed state; and
when the door body is in the closed state, sending a third instruction to the server.

For example, the second instruction is an instruction whether the door body is in a closed state and the third instruction is a door body normally closed summary instruction in the following description. When there are vehicles, persons, and/or animals in the battery swap station, the door body meets the closing condition and the controller controls the door control device to close the door body. In this case, to confirm whether the door body is closed successfully, the controller sends the instruction whether the door body is in a closed state to the AI edge computing unit, and after the AI edge computing unit receives the instruction, the AI edge computing unit determines whether the door body is in the closed state, through the monitoring device. When the door body is in the closed state, the controller sends the door body normally closed summary instruction to the server, which indicates that the door body is closed successfully.

Further, the door management method further includes:
when the door body is in an open state, obtaining a closing time of the door body;
comparing the closing time of the door body with a first preset time; and
when the closing time is greater than or equal to the first preset time, sending fourth alarm information to the server; or
when the closing time is less than the first preset time, controlling the door control device to close the door body.

For example, the second instruction is an instruction whether the door body is in a closed state and the first preset time is 60s in the following description. When the AI edge computing unit determines that the door body is in the open state, through the monitoring device, it indicates that the door body is not closed successfully. The closing of the door body has overtime protection, and when the door body is not closed within a specified time, it indicates that the door control device is faulty. Specifically, the closing time of the door body is obtained, and the closing time of the door body is compared with the first preset time. When the closing time is greater than or equal to 60s, it indicates that there is a fault in the door body, and the problem is solved by sending an alarm to the server. When the closing time is less than 60s, the closing time of the door body is not yet up. In this case, it is not yet possible to determine whether there is a fault in the door body, and the controller needs to continue to control the door control device to close the door body. The fourth alarm information includes door body fault information.

In an implementation, the door management method further includes:
in response to the controller sending the second instruction to the AI edge computing unit, in a case that the AI edge computing unit has not received the second instruction, obtaining a second number of sending times for which the controller sends the second instruction to the AI edge computing unit;
comparing the second number of sending times with a second preset number of times; and
when the second number of sending times is greater than or equal to the second preset number of times, sending fifth alarm information to the server; or
when the second number of sending times is less than the second preset number of times, continuing to send the second instruction to the AI edge computing unit.

For example, the second instruction is an instruction whether the door body is in a closed state and the second preset number of times is 3 in the following description. When the AI edge computing unit has not obtained the instruction whether the door body is in the closed state that is sent from the controller, the second number of sending times for which the controller sends the instruction whether the door body is in the closed state to the AI edge computing unit is obtained. When the second number of sending times is greater than or equal to 3, it indicates that the interaction between the AI edge computing unit and the controller is faulty, and the AI edge computing unit cannot obtain the instruction whether the door body is in the closed state sent from the controller at all, so that the fifth alarm information is sent to the server to indicate that there is a fault in the interaction between the AI edge computing unit and the controller. When the first number of sending times is less than 3, it is not yet possible to confirm whether there is a fault in the interaction between the AI edge computing unit and the controller, and therefore the controller needs to continue to send the instruction whether the door body is in the closed state to the AI edge computing unit. The fifth alarm information may be the same as the first alarm information, and includes interaction fault information between the controller and the AI edge computing unit.

In an implementation, before the step of "determining, by the AI edge computing unit based on the second instruction, whether the door body is in a closed state", the door management method further includes:
determining, by the AI edge computing unit based on the second instruction, whether the monitoring device and its communication are normal; and
when the monitoring device and its communication are normal, determining whether the door body is in the closed state.

For example, the second instruction is an instruction whether the door body is in a closed state in the following description. Before determining whether the door body is in the closed state, the AI edge computing unit detects whether the monitoring device and its communication are normal, to improve the accuracy of the determining result. When the AI edge computing unit detects that the monitoring device and its communication are normal, it indicates that there is no problem with the data sent by the monitoring device to the AI edge computing unit, and the AI edge computing unit may determine whether the door body is in the closed state, which can improve the determining accuracy.

Further, the door management method further includes:
performing, by the AI edge computing unit, verification on a result that the monitoring device and its communication are normal; and
when the verification succeeds, determining whether the door body is in the closed state.

When the AI edge computing unit detects that the monitoring device and its communication are normal, verification is performed on the detection result, which can further improve the accuracy of the result that the AI edge computing unit determines whether the door body is in the closed state. After the verification succeeds, the AI edge computing unit determines whether the door body is in the closed state, so that the accuracy of the determining result is improved.

Still further, the door management method further includes:
when the verification fails, obtaining a second number of verification times;
comparing the second number of verification times with a second preset number of verification times; and
when the second number of verification times is greater than or equal to the second preset number of verification times, determining that the door body does not meet the closing condition, and sending sixth alarm information to the server; or
when the second number of verification times is less than the second preset number of verification times, performing, by the AI edge computing unit, verification on the result that the monitoring device and its communication are normal.

For example, the second preset number of verification times is 3 in the following description. When the AI edge computing unit verifies that the result that the monitoring device and its communication are normal is invalid, the second number of verification times is obtained. When the second number of verification times is greater than or equal to 3, it is confirmed that the result that the monitoring device and its communication are normal is invalid, and there is a fault in the operation of the AI edge computing unit. In this case, the AI edge computing unit no longer determines whether there are vehicles, persons, and/or animals in the unattended battery swap station, and sends the sixth alarm information to the server. When the second number of verification times is less than 3, it is not yet possible to determine whether the verification of the result that the monitoring device and its communication are normal succeeds, and the AI edge computing unit still needs to verify the result that the monitoring device and its communication are normal. The sixth alarm information may be the same as the second alarm information, and includes an operation fault of the AI edge computing unit.

In an implementation, the door management method further includes:
when the monitoring device or the communication of the monitoring device or both are abnormal, sending seventh alarm information to the server.

When the monitoring device or the communication of the monitoring device or both are abnormal, it indicates that there is a fault in the monitoring device and/or the communication of the monitoring device, the seventh alarm information is sent to the server to indicate that there is a fault in the monitoring device and/or the communication of the monitoring device. In a case that there is a fault in the monitoring device and/or the communication of the monitoring device, it is impossible to determine whether there are vehicles, persons, and/or animals in the battery swap station. To avoid safety hazards that the vehicles, persons, and/or animals are locked in the unattended battery swap station and the vehicles, persons, and/or animals get caught, the controller may control the door control device to open the door body. The seventh alarm information is the same as the seventh alarm information, and includes fault information of the monitoring device and/or communication fault information of the monitoring device.

It should be noted that the above preferred implementations are merely used for illustrating the principles of the disclosure, and are not intended to limit the scope of protection of the disclosure. Those skilled in the art can adjust the above configuration without departing from the principles of the disclosure, such that the disclosure can be applicable to more specific application scenarios.

In an alternative implementation, after the first alarm information, the second alarm information, the third alarm information, the fourth alarm information, the fifth alarm information, the sixth alarm information, the seventh alarm information, the eighth alarm information, and the ninth alarm information are sent to the server, the door management method may further include: generating, by the server, corresponding fault information according to the above alarm information, and performing, by server-side personnel, corresponding processing according to the fault information, thereby ensuring the safety of the battery swap station. Because the alarm information is different, after the server receives the corresponding alarm information, it is convenient for the server-side personnel to deal with the problem according to the different alarm information.

In an alternative implementation, the order in which the controller sends the third instruction to the head unit and the controller sends the fourth instruction to the server is not fixed, and the order may also be that the controller sends the fourth instruction to the server first and then sends the third instruction to the head unit. Alternatively, the controller may also send the third instruction to the head unit and the fourth instruction to the server simultaneously. In addition, the steps of the controller sending the third instruction to the head unit and/or the controller sending the fourth instruction to the server are not necessary, and those skilled in the art may choose the steps according to specific application scenarios.

In an alternative implementation, because the monitoring device and its communication have been detected when the controller sends the first instruction to the AEC, it is not a necessary step for the AI edge computing unit to determine whether the monitoring device and its communication are normal when the controller sends the second instruction to the AEC, and on this basis, it is also not a necessary step for the AI edge computing unit to perform verification on the result that the monitoring device and its communication are normal.

In an alternative implementation, when comparing the first number of sending times with the first preset number of times, the second number of sending times with the second preset number of times, the third number of sending times with the third preset number of times, the fourth number of sending times with the fourth preset number of times, the fifth number of sending times with the fifth preset number of times, the first number of verification times with the first preset number of verification times, the second number of verification times with the second preset number of verification times, the closing time with the first preset time, and the waiting time with the second preset time, whether the difference between them is greater than 0 or whether the ratio between them is greater than 1 may be compared. As long the two can be compared, those skilled in the art may choose a specific comparison method according to their needs.

In an alternative implementation, the disclosure does not limit a sensors and a camera, as long as the AI edge computing unit can determine whether there are vehicles, persons, and/or animals in the station through the sensor and the camera. For example, the sensor may be a pressure sensor, a contact sensor, and/or a proximity sensor, and/or the camera may be an infrared camera, etc. In addition, the unattended battery swap station may include various types of sensors and cameras, which is not only conducive to monitoring the unattended battery swap station, but also conducive to improving the accuracy of the determining result of the AI edge computing unit.

To sum up, the AI edge computing unit can not only obtain the situation in the battery swap station from the monitoring device, detect whether the monitoring device and its communication are normal, and verify the detected results, but can also perform exception handling when the monitoring device and its communication are abnormal and the verification results fail, so that the safety performance of the unattended battery swap station is improved. In addition, the server can make a response according to the obtained alarm information, and deal with various feedback anomalies, devices and other problems, so as to ensure the safety of the entire unattended battery swap station system and facilitate the unmanned, large-scale, and expanded management of the battery swap station.

The following briefly describes, with reference to FIG. 3, a possible operation process of an unattended battery swap station system according to the disclosure. FIG. 3 is a logic diagram of a possible implementation of a door management method for an unattended battery swap station system according to the disclosure.

As shown in FIG. 3, in a possible operation process:
S201. A controller obtains battery swap information of a vehicle. Then S202 is performed.
S202. Determine, based on the battery swap information, whether battery swap for the vehicle is completed. If the battery swap is completed, S203 is performed; and if the battery swap is not completed, S201 is performed.
S203. The controller sends a battery swap completion instruction to a head unit. Then S204 is performed.
S204. Determine whether the head unit receives the battery swap completion instruction. If the instruction is received, S215 is performed; and if the instruction is not received, S205 is performed.
S205. The controller obtains a third number of sending times for which the battery swap completion instruction is sent to the head unit. Then S206 is performed.
S206. Determine whether the third number of sending times is greater than or equal to 3. If the third number of sending times is greater than or equal to 3, S207 is performed; otherwise, S205 is performed.
S207. The controller sends eighth alarm information to a server. Then S208 is performed.
S208. Determine whether the server receives the eighth alarm information. If the eighth alarm information is received, S214 is performed; and if the eighth alarm information is not received, S209 is performed.
S209. Obtain a fourth number of sending times for which the eighth alarm information is sent by the controller to the server. Then S210 is performed.
S210. Determine whether the fourth number of sending times is greater than or equal to 3. If the fourth number of sending times is greater than or equal to 3, S211 is performed; otherwise, S207 is performed.
S211. The controller disconnects a connection to the head unit, and the battery swap station no longer provides a service for the vehicle. Then S212 is performed.
S212. The server obtains a waiting time for interacting with the controller. Then S213 is performed.
S213. Compare whether the waiting time is greater than or equal to 60s. If the waiting time is greater than or equal to 60s, S214 is performed; and if the waiting time is less than 60s, S212 is performed.
S214. The server generates fault information, and server-side personnel handle the problem according to the fault information.
S215. The controller uploads a battery swap completion summary to the server. Then S216 is performed.
S216. Determine whether the server receives the battery swap completion summary. If the server receives the battery swap completion summary, S219 is performed; and if the battery swap completion summary is not received, S217 is performed.
S217. The controller obtains a fifth number of sending times for which the battery swap completion summary is sent to the server. Then S218 is performed.
S218. Determine whether the fifth number of sending times is greater than or equal to 3. If the fifth number of sending times is greater than or equal to 3, S214 is performed; and if the fifth number of sending times is less than 3, S215 is performed.
S219. The controller sends an instruction of determining whether there are vehicles, persons, and/or animals in the unattended battery swap station to an AI edge computing unit. Then S220 is performed.
S220. Determine whether the AI edge computing unit receives the instruction of determining whether there are vehicles, persons, and/or animals in the unattended battery swap station. If the instruction is received, S223 is performed; otherwise, S221 is performed.
S221. The controller obtains a first number of sending times for which the instruction of determining whether there are vehicles, persons, and/or animals in the unattended battery swap station is sent to the AI edge computing unit. Then S222 is performed.
S222. Determine whether the first number of sending times is greater than or equal to 3. If the first number of sending times is greater than or equal to 3, an alarm is sent to the server, and S214 is performed; otherwise, S219 is performed.
S223. The AI edge computing unit determines whether a monitoring device and its communication are normal. If they are normal, step S224 is performed; and if they are not normal, an alarm is sent to the server, and S214 is performed.
S224. The AI edge computing unit performs verification on a result that the monitoring device and its communication are normal. If the verification is valid, step S227 is performed; and if the verification fails, S225 is performed.
S225. The AI edge computing unit obtains a first number of verification times for which verification is performed on the result that the monitoring device and its communication are normal. Then S226 is performed.
S226. Determine whether the first number of verification times is greater than or equal to 3. If the first number of verification times is greater than or equal to 3, an alarm is sent to the server, and S214 is performed; and if the first number of verification times is less than 3, S224 is performed.
S227. The AI edge computing unit determines whether there are vehicles, persons, and/or animals in the unattended battery swap station. If there are vehicles, persons, and/or animals, S228 is performed; and if there are no vehicles, persons, and/or animals, S229 is performed.
S228. The controller controls a door control device to open a door body. Then S 114 is performed.
S229. The controller controls the door control device to close the door body. Then S230 is performed.
S230. The controller sends an instruction whether the door body is in a closed state to the AI edge computing unit. Then S231 is performed.
S231. Determine whether the AI edge computing unit receives the instruction whether the door body is in a closed state. If the instruction is received, S234 is performed; otherwise, S232 is performed.
S232. The controller obtains a second number of sending times for which the instruction whether the door body is in a closed state is sent to the AI edge computing unit. Then S233 is performed.
S233. Determine whether the second number of sending times is greater than or equal to 3. If the second number of sending times is greater than or equal to 3, an alarm is sent to the server, and S214 is performed; otherwise, S229 is performed.
S234. The AI edge computing unit determines whether the monitoring device and its communication are normal. If they are normal, step S235 is performed; and if they are not normal, an alarm is sent to the server, and S214 is performed.
S235. The AI edge computing unit performs verification on a result that the monitoring device and its communication are normal. If the verification is valid, S238 is performed; and if the verification fails, S236 is performed.
S236. The AI edge computing unit obtains a second number of verification times for which verification is performed on the result that the monitoring device and its communication are normal. Then S237 is performed.
S237. Determine whether the second number of verification times is greater than or equal to 3. If the second number of verification times is greater than or equal to 3, an alarm is sent to the server, and S214 is performed; and if the second number of verification times is less than 3, S235 is performed.
S238. The AI edge computing unit determines whether the door body is in a closed state. If the door body is in the closed state, S241 is performed; and if it is not in the closed state, S239 is performed.
S239. The controller obtains a closing time of the door body. Then S240 is performed.
S240. Determine whether the closing time is greater than or equal to 60s. If the closing time is greater than or equal to 60s, S214 is performed; and if the closing time is less than 60s, S229 is performed.
S241. The controller sends a door body normally closed summary instruction to the server.

Those skilled in the art can understand that although some embodiments described herein include some but not other features included in other embodiments, combinations of features of different embodiments are meant to be within the scope of the disclosure and form different embodiments. For example, in the claims of the disclosure, any one of the claimed embodiments can be used in any combination.

It should be noted that although the detailed steps of the method of the disclosure are described in detail above, those skilled in the art can combine, split, and change the order of the above steps without departing from the basic principles of the disclosure. The technical solution modified in such a way does not change the basic idea of the disclosure, and therefore also falls within the scope of protection of the disclosure.

Heretofore, the technical solutions of the disclosure have been described in combination with the preferred implementations shown in accompanying drawings. However, those skilled in the art can readily understand that the scope of protection of the disclosure is apparently not limited to these particular implementations. Those skilled in the art can make equivalent changes or substitutions to the related technical features without departing from the principle of the disclosure, and all the technical solutions with such changes or substitutions shall fall within the scope of protection of the disclosure.

## Claims

1. A door management method for an unattended battery swap station system, wherein the unattended battery swap station system comprises a controller, an AI edge computing unit, a monitoring device, and a door control device, the controller is connected to the AI edge computing unit and the door control device, and the AI edge computing unit is connected to the monitoring device, **characterized in that** the door management method comprising:
obtaining (S101), by the controller, battery swap information of a vehicle;
determining (S102), based on the battery swap information, whether battery swap for the vehicle is completed;
when the battery swap for the vehicle is completed, determining (S103), by the AI edge computing unit, whether a door body meets a closing condition; and
controlling (S104), based on a determining result, the door control device to selectively close the door body.

2. The door management method according to claim 1, wherein the step of "when the battery swap for the vehicle is completed, determining, by the AI edge computing unit, whether a door body meets a closing condition" further comprises:
when the battery swap for the vehicle is completed, sending, by the controller, a first instruction to the AI edge computing unit, so that the AI edge computing unit determines, based on the first instruction, whether there are vehicles, persons, and/or animals in the unattended battery swap station.

3. The door management method according to claim 2, wherein the step of "controlling, based on a determining result, the door control device to selectively close the door body" further comprises:
when there are no vehicles, persons, and/or animals in the unattended battery swap station, controlling the door control device to close the door body; or
when there are vehicles, persons, and/or animals in the unattended battery swap station, controlling the door control device to open the door body.

4. The door management method according to claim 2 or 3, wherein the door management method further comprises:
in response to the controller sending the first instruction to the AI edge computing unit, in a case that the AI edge computing unit has not obtained the first instruction, obtaining a first number of sending times for which the controller sends the first instruction to the AI edge computing unit;
comparing the first number of sending times with a first preset number of times; and
when the first number of sending times is greater than or equal to the first preset number of times, sending first alarm information to a server of the unattended battery swap station system; or
when the first number of sending times is less than the first preset number of times, continuing to send the first instruction to the AI edge computing unit.

5. The door management method according to any one of claims 2 to 4, wherein before the step of "determining, by the AI edge computing unit based on the first instruction, whether there are vehicles, persons, and/or animals in the unattended battery swap station", the method further comprises:
determining, by the AI edge computing unit based on the first instruction, whether the monitoring device and its communication are normal; and
when the monitoring device and its communication are normal, determining whether there are vehicles, persons, and/or animals in the unattended battery swap station.

6. The door management method according to claim 5, wherein the door management method further comprises:
performing, by the AI edge computing unit, verification on a result that the monitoring device and its communication are normal; and
when the verification succeeds, determining whether there are vehicles, persons, and/or animals in the unattended battery swap station.

7. The door management method according to claim 6, wherein the door management method further comprises:
when the verification fails, obtaining a first number of verification times;
comparing the first number of verification times with a first preset number of verification times; and
when the first number of verification times is greater than or equal to the first preset number of verification times, determining that the door body does not meet the closing condition, and sending second alarm information to a server of the unattended battery swap station system; or
when the first number of verification times is less than the first preset number of verification times, performing, by the AI edge computing unit, verification on the result that the monitoring device and its communication are normal.

8. The door management method according to claim 5, 6 or 7, wherein the management method further comprises:
when the monitoring device or the communication of the monitoring device or both are abnormal, sending third alarm information to a server of the unattended battery swap station system.

9. The door management method according to any one of claims 3 to 8, wherein after the step of "when there are vehicles, persons, and/or animals in the unattended battery swap station, controlling the door control device to close the door body", the method further comprises:
sending, by the controller, a second instruction to the AI edge computing unit, so that the AI edge computing unit determines, based on the second instruction, whether the door body is in a closed state; and
when the door body is in the closed state, sending a third instruction to a server of the unattended battery swap station system.

10. The door management method according to claim 9, wherein the door management method further comprises:
when the door body is in an open state, obtaining a closing time of the door body;
comparing the closing time of the door body with a first preset time; and
when the closing time is greater than or equal to the first preset time, sending fourth alarm information to the server; or
when the closing time is less than the first preset time, controlling the door control device to close the door body.

## Patentansprüche

1. Türverwaltungsverfahren für ein unbeaufsichtigtes Batteriewechselstationssystem, wobei das unbeaufsichtigte Batteriewechselstationssystem Folgendes umfasst: eine Steuerung, eine KI-Edge-Computing-Einheit, eine Überwachungsvorrichtung und eine Türsteuervorrichtung, wobei die Steuerung mit der KI-Edge-Computing-Einheit und der Türsteuervorrichtung verbunden ist und wobei die KI-Edge-Computing-Einheit mit der Überwachungsvorrichtung verbunden ist, **dadurch gekennzeichnet, dass** das Türverwaltungsverfahren Folgendes umfasst:
Erhalten (S101), durch die Steuerung, von Batteriewechselinformationen eines Fahrzeugs;
Bestimmen (S102), basierend auf den Batteriewechselinformationen, ob der Batteriewechsel für das Fahrzeug abgeschlossen ist;
wenn der Batteriewechsel für das Fahrzeug abgeschlossen ist, Bestimmen (S103), durch die KI-Edge-Computing-Einheit, ob ein Türkörper eine Schließbedingung erfüllt; und
Steuern (S104), basierend auf einem Bestimmungsergebnis, der Türsteuervorrichtung zum gezielten Schließen des Türkörpers.

2. Türverwaltungsverfahren nach Anspruch 1, wobei der Schritt des "wenn der Batteriewechsel für das Fahrzeug abgeschlossen ist, Bestimmens, durch die KI-Edge-Computing-Einheit, ob ein Türkörper eine Schließbedingung erfüllt" ferner Folgendes umfasst:
wenn der Batteriewechsel für das Fahrzeug abgeschlossen ist, Senden, durch die Steuerung, einer ersten Anweisung an die KI-Edge-Computing-Einheit, sodass die KI-Edge-Computing-Einheit bestimmt, basierend auf der ersten Anweisung, ob es Fahrzeuge, Personen und/oder Tiere in der unbeaufsichtigten Batteriewechselstation gibt.

3. Türverwaltungsverfahren nach Anspruch 2, wobei der Schritt des "Steuerns, basierend auf einem Bestimmungsergebnis, der Türsteuervorrichtung zum gezielten Schließen des Türkörpers" ferner Folgendes umfasst:
wenn es keine Fahrzeuge, Personen und/oder Tiere in der unbeaufsichtigten Batteriewechselstation gibt, Steuern der Türsteuervorrichtung zum Schließen des Türkörpers; oder
wenn es Fahrzeuge, Personen und/oder Tiere in der unbeaufsichtigten Batteriewechselstation gibt, Steuern der Türsteuervorrichtung zum Öffnen des Türkörpers.

4. Türverwaltungsverfahren nach Anspruch 2 oder 3, wobei das Türverwaltungsverfahren ferner Folgendes umfasst:
in Reaktion darauf, dass die Steuerung die erste Anweisung an die KI-Edge-Computing-Einheit sendet, in einem Fall, dass die KI-Edge-Computing-Einheit die erste Anweisung nicht erhalten hat, Erhalten einer ersten Anzahl von Sendezeiten, zu denen die Steuerung die erste Anweisung an die KI-Edge-Computing-Einheit sendet;
Vergleichen der ersten Anzahl von Sendezeiten mit einer ersten voreingestellten Anzahl von Zeiten; und
wenn die erste Anzahl von Sendezeiten größer als oder gleich der ersten voreingestellten Anzahl von Zeiten ist, Senden von ersten Alarminformationen an einen Server des unbeaufsichtigten Batteriewechselstationssystems; oder
wenn die erste Anzahl von Sendezeiten kleiner als die erste voreingestellte Anzahl von Zeiten ist, Fortfahren mit dem Senden der ersten Anweisung an die KI-Edge-Computing-Einheit.

5. Türverwaltungsverfahren nach einem der Ansprüche 2 bis 4, wobei vor dem Schritt des "Bestimmens, durch die KI-Edge-Computing-Einheit basierend auf der ersten Anweisung, ob es Fahrzeuge, Personen und/oder Tiere in der unbeaufsichtigten Batteriewechselstation gibt", das Verfahren ferner Folgendes umfasst:
Bestimmen, durch die KI-Edge-Computing-Einheit basierend auf der ersten Anweisung, ob die Überwachungsvorrichtung und ihre Kommunikation normal sind; und
wenn die Überwachungsvorrichtung und ihre Kommunikation normal sind, Bestimmen, ob es Fahrzeuge, Personen und/oder Tiere in der unbeaufsichtigten Batteriewechselstation gibt.

6. Türverwaltungsverfahren nach Anspruch 5, wobei das Türverwaltungsverfahren Folgendes umfasst:
Durchführen, durch die KI-Edge-Computing-Einheit, von Verifizierung eines Ergebnisses, dass die Überwachungsvorrichtung und ihre Kommunikation normal sind; und
wenn die Verifizierung erfolgreich ist, Bestimmen, ob es Fahrzeuge, Personen und/oder Tiere in der unbeaufsichtigten Batteriewechselstation gibt.

7. Türverwaltungsverfahren nach Anspruch 6, wobei das Türverwaltungsverfahren Folgendes umfasst:
wenn die Verifizierung fehlschlägt, Erhalten einer ersten Anzahl von Verifizierungszeiten;
Vergleichen der ersten Anzahl von Verifizierungszeiten mit einer ersten voreingestellten Anzahl von Verifizierungszeiten; und
wenn die erste Anzahl von Verifizierungszeiten größer als oder gleich der ersten voreingestellten Anzahl von Verifizierungszeiten ist, Bestimmen, dass der Türkörper die Schließbedingung nicht erfüllt, und Senden von zweiten Alarminformationen an einen Server des unbeaufsichtigten Batteriewechselstationssystems; oder
wenn die erste Anzahl von Verifizierungszeiten kleiner als die erste voreingestellte Anzahl von Verifizierungszeiten ist, Durchführen, durch die KI-Edge-Computing-Einheit, von Verifizierung des Ergebnisses, dass die Überwachungsvorrichtung und ihre Kommunikation normal sind.

8. Türverwaltungsverfahren nach Anspruch 5, 6 oder 7, wobei das Verwaltungsverfahren ferner Folgendes umfasst: wenn die Überwachungsvorrichtung oder die Kommunikation der Überwachungsvorrichtung oder beide nicht normal sind, Senden von dritten Alarminformationen an einen Server des unbeaufsichtigten Batteriewechselstationssystems.

9. Türverwaltungsverfahren nach einem der Ansprüche 3 bis 8, wobei nach dem Schritt des "wenn es keine Fahrzeuge, Personen und/oder Tiere in der unbeaufsichtigten Batteriewechselstation gibt, Steuerns der Türsteuervorrichtung zum Schließen des Türkörpers" das Verfahren ferner Folgendes umfasst:
Senden, durch die Steuerung, einer zweiten Anweisung an die KI-Edge-Computing-Einheit, sodass die KI-Edge-Computing-Einheit bestimmt, basierend auf der zweiten Anweisung, ob sich der Türkörper in einem geschlossenen Zustand befindet; und
wenn sich der Türkörper in dem geschlossenen Zustand befindet, Senden einer dritten Anweisung an einen Server des unbeaufsichtigten Batteriewechselstationssystems.

10. Türverwaltungsverfahren nach Anspruch 9, wobei das Türverwaltungsverfahren Folgendes umfasst:
wenn sich der Türkörper in einem offenen Zustand befindet, Erhalten einer Schließzeit des Türkörpers;
Vergleichen der Schließzeit des Türkörpers mit einer ersten voreingestellten Zeit; und
wenn die Schließzeit größer als oder gleich der ersten voreingestellten Zeit ist, Senden von vierten Alarminformationen an den Server; oder
wenn die Schließzeit kleiner als die erste voreingestellte Zeit ist, Steuern der Türsteuervorrichtung zum Schließen des Türkörpers.

## Revendications

1. Procédé de gestion de porte pour un système de station d'échange de batteries sans supervision humaine, le système de station d'échange de batteries sans supervision humaine comprenant un contrôleur, une unité d'informatique en périphérie IA, un dispositif de surveillance, et un dispositif de commande de porte, le contrôleur étant connecté à l'unité d'informatique en périphérie IA et au dispositif de commande de porte, et l'unité d'informatique en périphérie IA étant connectée au dispositif de surveillance, le procédé de gestion de porte étant **caractérisé en ce qu'**il comprend :
l'obtention (S101), par le contrôleur, d'informations d'échange de batterie d'un véhicule ;
la détermination (S102), sur la base des informations d'échange de batterie, si un échange de batterie pour le véhicule est achevé ou non ;
lorsque l'échange de batterie pour le véhicule est achevé, la détermination (S103), par l'unité d'informatique en périphérie IA, si un corps de porte remplit ou non une condition de fermeture ; et
la commande (S104), sur la base d'un résultat de détermination, du dispositif de commande de porte afin de fermer sélectivement le corps de porte.

2. Procédé de gestion de porte selon la revendication 1, dans lequel l'étape de « lorsque l'échange de batterie pour le véhicule est achevé, détermination, par l'unité d'informatique en périphérie IA, si un corps de porte remplit ou non une condition de fermeture » comprend en outre :
lorsque l'échange de batterie pour le véhicule est achevé, l'envoi, par le contrôleur, d'une première instruction à l'unité d'informatique en périphérie IA, de sorte que l'unité d'informatique en périphérie IA détermine, sur la base de la première instruction, si des véhicules, des personnes, et/ou des animaux sont présents ou non dans la station d'échange de batteries sans supervision humaine.

3. Procédé de gestion de porte selon la revendication 2, dans lequel l'étape de « commande, sur la base d'un résultat de détermination, du dispositif de commande de porte afin de fermer sélectivement le corps de porte » comprend en outre :
lorsqu'aucun véhicule, aucune personne, et/ou aucun animal ne sont présents dans la station d'échange de batteries sans supervision humaine, la commande du dispositif de commande de porte afin de fermer le corps de porte ; ou
lorsque des véhicules, des personnes, et/ou des animaux sont présents dans la station d'échange de batteries sans supervision humaine, la commande du dispositif de commande de porte afin d'ouvrir le corps de porte.

4. Procédé de gestion de porte selon la revendication 2 ou 3, le procédé de gestion de porte comprenant en outre :
en réponse à l'envoi, par le contrôleur, de la première instruction à l'unité d'informatique en périphérie IA, dans le cas où l'unité d'informatique en périphérie IA n'a pas obtenu la première instruction, l'obtention d'un premier nombre de fois d'envoi où le contrôleur envoie la première instruction à l'unité d'informatique en périphérie IA ;
la comparaison du premier nombre de fois d'envoi avec un premier nombre prédéfini de fois ; et
lorsque le premier nombre de fois d'envoi est supérieur ou égal au premier nombre prédéfini de fois, l'envoi d'une première information d'alerte à un serveur du système de station d'échange de batteries sans supervision humaine ; ou
lorsque le premier nombre de fois d'envoi est inférieur au premier nombre prédéfini de fois, la poursuite de l'envoi de la première instruction à l'unité d'informatique en périphérie IA.

5. Procédé de gestion de porte selon l'une quelconque des revendications 2 à 4, le procédé comprenant en outre, avant l'étape de « détermination, par l'unité d'informatique en périphérie IA sur la base de la première instruction, si des véhicules, des personnes, et/ou des animaux sont présents ou non dans la station d'échange de batteries sans supervision humaine » :
la détermination, par l'unité d'informatique en périphérie IA sur la base de la première instruction, si le dispositif de surveillance et sa communication sont normaux ou non ; et
lorsque le dispositif de surveillance et sa communication sont normaux, la détermination si des véhicules, des personnes, et/ou des animaux sont présents ou non dans la station d'échange de batteries sans supervision humaine.

6. Procédé de gestion de porte selon la revendication 5, le procédé de gestion de porte comprenant en outre :
la réalisation, par l'unité d'informatique en périphérie IA, sur un résultat, d'une vérification que le dispositif de surveillance et sa communication sont normaux ; et
lorsque la vérification réussit, la détermination si des véhicules, des personnes, et/ou des animaux sont présents ou non dans la station d'échange de batteries sans supervision humaine.

7. Procédé de gestion de porte selon la revendication 6, le procédé de gestion de porte comprenant en outre :
lorsque la vérification échoue, l'obtention d'un premier nombre de fois de vérification ;
la comparaison du premier nombre de fois de vérification avec un premier nombre prédéfini de fois de vérification ; et
lorsque le premier nombre de fois de vérification est supérieur ou égal au premier nombre prédéfini de fois de vérification, la détermination que le corps de porte ne remplit pas la condition de fermeture, et l'envoi d'une deuxième information d'alerte à un serveur du système de station d'échange de batteries sans supervision humaine ; ou
lorsque le premier nombre de fois de vérification est inférieur au premier nombre prédéfini de fois de vérification, la réalisation, par l'unité d'informatique en périphérie IA, sur le résultat, d'une vérification que le dispositif de surveillance et sa communication sont normaux.

8. Procédé de gestion de porte selon la revendication 5, 6 ou 7, le procédé de gestion comprenant en outre :
lorsque le dispositif de surveillance et/ou la communication du dispositif de surveillance sont anormaux, l'envoi d'une troisième information d'alerte à un serveur du système de station d'échange de batteries sans supervision humaine.

9. Procédé de gestion de porte selon l'une quelconque des revendications 3 à 8, le procédé comprenant en outre, après l'étape de « lorsque des véhicules, des personnes, et/ou des animaux sont présents dans la station d'échange de batteries sans supervision humaine, commande du dispositif de commande de porte afin de fermer le corps de porte » :
l'envoi, par le contrôleur, d'une deuxième instruction à l'unité d'informatique en périphérie IA, de sorte que l'unité d'informatique en périphérie IA détermine, sur la base de la deuxième instruction, si le corps de porte est dans un état fermé ou non ; et
lorsque le corps de porte est dans l'état fermé, l'envoi d'une troisième instruction à un serveur du système de station d'échange de batteries sans supervision humaine.

10. Procédé de gestion de porte selon la revendication 9, le procédé de gestion de porte comprenant en outre :
lorsque le corps de porte est dans un état ouvert, l'obtention d'un temps de fermeture du corps de porte ;
la comparaison du temps de fermeture du corps de porte avec un premier temps prédéfini ; et
lorsque le temps de fermeture est supérieur ou égal au premier temps prédéfini, l'envoi d'une quatrième information d'alerte au serveur ; ou
lorsque le temps de fermeture est inférieur au premier temps prédéfini, la commande du dispositif de commande de porte afin de fermer le corps de porte.
